(19) **Europäisches Patentamt**
**European Patent Office**
**Office européen des brevets**

(11) **EP 2 709 263 A1**

(12) **EUROPEAN PATENT APPLICATION**

(43) Date of publication:
**19.03.2014 Bulletin 2014/12**

(51) Int Cl.:
**H02P 6/18** (2006.01)

(21) Application number: **12405097.2**

(22) Date of filing: **12.09.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Celeroton AG
8005 Zürich (CH)**

(72) Inventors:
• **Tüysüz, Arda
8050 Zürich (CH)**
• **Zwyssig, Christof
8645 Jona (CH)**

(74) Representative: **Frei Patent Attorneys
Frei Patentanwaltsbüro AG
Postfach 1771
8032 Zürich (CH)**

(54) **Method and apparatus to determine the position in an electrical machine**

(57) An **apparatus** for detecting the position in an electrical machine (1) comprises an injection source (61) and a differential measurement unit (62).
• The **injection source** (61) is arranged to apply a test signal to one phase terminal (2") of the electrical machine (1), with respect to a star point (2"') or to at least two other phase terminals (2, 2");
• The **differential measurement unit (62)** is arranged to perform a differential measurement of a response to the test signal on at least two phase terminals (2, 2') of the electrical machine (1), wherein these two phase terminals are different from the phase terminal (2") to which the test signal is applied.

The apparatus further comprises a **position estimating unit (10)** arranged to determine, from a result of the differential measurement, an estimate of the relative position of the second and the first part (11a, 11b).

**Fig. 1**

EP 2 709 263 A1

**Description**

The invention is related to the field of sensorless position detection in electrical machines, and in particular to an apparatus and a method for determining the relative position between two parts of a rotating or linear electrical machine with low saliency according to the corresponding independent claims.

The angular position of an electrical machine is needed for a controlled operation. Traditionally, dedicated position sensors (optical sensors, encoders, Hall sensors etc.) are used for obtaining the position information. However, having position sensors have several disadvantages (increased cost, decreased the reliability, space needed for those sensors etc.). Therefore, an important amount of research has been carried out for obtaining the rotor position without position sensors. If the measurable electrical quantities in a machine (stator impedance or back emf) contain position information, those quantities can be measured using electrical sensors (e.g. current or voltage sensors) which are anyways utilized for driving the machine. This way, the disadvantages of using additional position sensors are eliminated. Such methods are called sensorless or self-sensing control methods.

There are mainly two methods of self-sensing control: measuring the machine impedance or measuring the back emf. The back emf gets very small and difficult to measure at low speeds, and it is zero at standstill. Therefore, back emf based methods cannot be used for standstill and low speeds. In contrary, the impedance of the machine can be measured and the rotor position information can be extracted also at low and zero speed. But in some machines, the impedance depends very weakly on the rotor position; such machines are called low-saliency machines. Self-sensing control gets difficult as very slight (down to around 1%) changes in the machine impedance need to be measured accurately.

The impedance of an electrical machine can be measured by applying a test signal (e.g. a voltage) to its windings and measuring the response (e.g. a current). This impedance measurement approach for self-sensing rotor position detection is referred to in the literature as "signal injection".

One way of implementing signal injection is by using the drive circuit driving the machine. In this approach the drive circuit is used not only for applying drive signals (voltages and/or currents) to drive the machine, but also for applying test signals to measure its impedance. Those two signals can be applied either in different time intervals or simultaneously. The first option has the disadvantage that drive signals are interrupted to measure the impedance. The second option enables continuous drive signals; however, it also has challenges. If the drive and measurement signals are applied to the machine simultaneously, they usually have different frequencies for easier filtering which requires the drive circuit to switch at high enough frequencies.

Another way of implementing signal injection is by using a separate circuit. Using an additional dedicated signal injection circuit decouples the signal injection from the drive circuit. Doing so, a test signal can be injected to the machine simultaneously with the drive signals, without the need for altering the drive circuit operation (e.g. increasing the switching frequency, as mentioned above).

WO2011/026988A2 shows a circuit arrangement for detecting the rotor position of a rotating electrical machine, where a zero-sequence high frequency signal is injected to the machine and the distribution of the high frequency signal is used to determine the rotor position. The distribution of the high-frequency current into the machine phases is measured using two special current transformers, which convert three phase currents to two phase (alpha and beta) frame currents. It is shown that either an additional circuit or the drive circuit itself can be used for injecting the zero-sequence signal. However, this method requires the star point of the machine to be accessible, which generally unwanted as it requires one more connection to the motor.

EP0967716A1 shows a device for measuring the inductances of the windings of an electrical machine for detecting the rotor position. High frequency signals are applied to the motor windings and a bridge type circuit arrangement is used for measuring the winding impedance. The use of a bridge allows for sensitive measurements but as described in the document it has the disadvantage that the bridge circuit needs to be placed in the motor such that the temperature related changes in the values of the circuit elements can be avoided. Furthermore, this method also requires a connection to the star point of the machine.

US6337554B1 discloses means for detecting the rotor position of an electrical machine using an additional oscillator circuit which along with the machine itself composes a resonant tank whose resonance frequency changes with the rotor position. It is shown how such an oscillator circuit can be used with a switching circuit to selectively use different phases of the machine, or two oscillator circuits can be used simultaneously and the switching circuit can be eliminated. However, this method is likely to suffer from inadequate sensitivity with low-saliency machines.

US6734666B2 and CH701063B1 show a method where a measurement signal is injected to one terminal of the machine with respect to another terminal and the remaining phase is used for measurements. In US6555977B1, similar approach is used and the zero crossing of the measured mutual inductance is used for detecting the rotor position.

Furthermore, in [Leidhold, R.; Mutschler, P., "Injection of a carrier with higher than the PWM frequency for sensorless position detection in PM synchronous motors," Power Electronics and Motion Control Conference (EPE-PEMC 2008), pp. 1353-1358, Sep. 2008] an additional signal injection circuit is proposed for rotor position detection, where the signal is injected through series connected transformers between the machine and the drive circuit. Three injection transformers are used in combination with amplifiers and digital-to-analog converters in order to inject a signal at a desired space vector angle, which is calculated using digital calculation means. Three phase currents are measured individually and converted to digital values for further processing after filtering, which makes this method flexible in terms of injected signal selection but limits its applicability for low-saliency machines.

It is therefore an object of the invention to create an apparatus and a method to determine the position of an electric machine which overcomes the disadvantages mentioned above. In particular, one object of the invention is to provide an apparatus that allows determining the position in low saliency electrical machines.

These objects are achieved by a method and/or apparatus according to at least some of the corresponding independent claims.

The **method** for detecting the position of a first part (for example, a moving part) of an electrical machine relative to a second part (for example, a stationary part) is based on applying an electrical test signal to the electrical machine and measuring a resulting electrical response of the electrical machine to the applied test signal. It comprises the steps of

- applying the test signal to one phase terminal of the electrical machine, with respect to a star point of the machine, or with respect to at least two other phase terminals of the electrical machine;
- performing a differential measurement of a response to the test signal on at least two phase terminals of the electrical machine, wherein these two phase terminals are different from the phase terminal to which the test signal is applied;
- determining, from a result of the differential measurement, an estimate of the relative position of the second and the first part.

Applying the test signal with respect to the star point of the machine means that a current injected by a signal injecting circuit at the phase terminal flows back to the signal injecting circuit via the star point. Similarly, applying the test signal with respect to other phase terminals of the machine means that the injected current flows back to the signal injecting circuit via these other phase terminals. In each case, the flow of the current can be determined by electrical connections and by filters arranged to let pass the test signal along a desired measurement path, or to block the test signal from flowing through, for example, a drive circuit or through other measurement arrangements. The naming convention thus is to consider the two locations in the machine and drive circuits to which the two terminals of the signal injection circuit are connected, and to consider a location which is either the star point or a connection of two phases to be a reference terminal, and the other location to be an injection terminal.

"Differential measurement" of voltages or of currents means that a difference between voltages or between currents performed by means of analog circuit elements. Such circuit elements can be differential transformers or differential amplifiers. Based on a resulting analog difference signal, an analog to digital conversion can be performed.

The result of this signal injection and measurement method is that the resulting difference signal is free from offsets.

In general, the test signal can have, for example, a sine, square, triangular or any arbitrary waveform.

As a rule, the differential current and voltage measurements can be interchanged with minor modification on the topologies.

Determining, from a result of the differential measurement, an estimate of the relative position of the second and the first part can be done according to methods that are well established for positional sensors that return a sinusoidal signal dependent on position. This holds for configurations where one, two, three or more different measurements are available, be it from a corresponding number of phase-shifted measurement arrangements operating in parallel, of from sequential phase-shifted measurements, obtained e.g. with different permutations of injection terminals. Two such measurements allow to determine the position and a direction of rotation and improve the accuracy, three such measurements can further improve the accuracy and introduce redundancy. Applicable methods can be found, for example, in [J. R. R Mayer, "High resolution of rotary encoder analog quadrature signals," IEEE Trans. Instrum. Meas., vol. 43, pp. 494-498, June 1994.] or [Tan, K.K.; Zhou, H.X.; Tong Heng Lee; , "New interpolation method for quadrature encoder signals," Instrumentation and Measurement, IEEE Transactions on , vol.51, no.5, pp. 1073-1079, Oct 2002]

A corresponding **apparatus** serves for detecting the position of a first part of an electrical machine relative to a second part by applying an electrical test signal to the electrical machine and measuring a resulting electrical response of the electrical machine to the applied test signal. The apparatus comprises a **measurement arrangement** which in turn comprises an injection source and a differential measurement unit,

- the **injection source** being arranged to apply the test signal to one phase terminal of the electrical machine, with respect to a star point of the machine, or with respect to at least two other phase terminals of the electrical machine;
- the **differential measurement unit** being arranged to perform a differential measurement of a response to the test signal on at least two phase terminals of the electrical machine, wherein these two phase terminals are different from the phase terminal to which the test signal is applied;

The apparatus further comprises a **position estimating unit** arranged to determine, from a result of the differential measurement, an estimate of the relative position of the second and the first part.

One embodiment comprises **simultaneously** performing the same steps of applying a test signal and performing a differential measurement, but with a further test signal, applying the further test signal to a different phase terminal than the test signal, and performing a further differential measurement at corresponding different phase terminals (that is, different from the terminal that the further test signal is applied to), and determining the estimate of the relative position from the results of both differential measurements. Having two measurements allows for a more exact position measurement and makes it possible to detect a direction of movement, for example in the usual case where the result of the differential measurement is a sinusoidal function of the position. The same principle is used in position sensors, as mentioned above. It can be extended to three or more (for a multiphase machine) differential measurement at corresponding different phase terminals.

A corresponding apparatus comprises at least one **further measurement arrangement** which in turn comprises a further injection source and a further differential measurement unit, the further measurement arrangement being arranged to inject a further test signal and to measure a response to the further test signal, but injecting and measuring at different terminals than the measurement arrangement.

One embodiment comprises **sequentially** applying the test signal to different phase terminals and performing a further differential measurement at corresponding different phase terminals, and determining the estimate of the relative position from the results of two or more such sequentially performed differential measurements. In other words, the same steps of applying a test signal and performing a differential measurement are performed, but sequentially. Then the measured values are combined, e.g. as described above and with the same advantages. Again, sequential measurements can be performed with two, three or more (for a multiphase machine) differential measurements at corresponding different phase terminals.

A corresponding apparatus comprises a **measurement switching circuit** arranged to connect a signal injection terminal of the injection source and input terminals and of the differential measurement circuit to the phase terminals of the electrical machine in different permutations.

In an embodiment, the test signal is generated by a circuit that is distinct from a drive circuit driving the movement of the electrical machine.

In a further embodiment, such a circuit is a three phase inverter, also to be called test signal inverter, performing the steps of repeatedly switching between different switching states, wherein in each switching state the test signal is applied to one of the phase terminals and the differential measurement is performed on two other phase terminals. In different switching states, the test signal is applied to different phase terminals, and correspondingly the measurement is performed on another pair of phase terminals. There can be two, three or more (for a multiphase machine) different switching states, corresponding to permutations of at which phase terminals the test signal is applied and at which phase terminals the measurements are made.

The three phase or multiphase inverter can comprise three or more bridge legs, each configured to connect a corresponding phase terminal to either a first or to a second signal source. The signal source can be an AC source or a DC source. The DC source can be at a nonzero voltage level or at a reference voltage or ground (zero) voltage source. That is, the point at which the signal is injected can be switched between two nonzero voltage levels, or between a nonzero and a zero voltage levels.

In another embodiment of the test signal inverter, it comprises only upper or only lower half bridges, in particular in the case when the signal source is an AC source.

In a further embodiment, the following steps are performed:

- generating the test signal by modulating a DC signal by switching between sub-states of each switching state, connecting the one phase terminal to which the test signal is to be applied to different DC signal levels by switching the switches of one bridge of the inverter;

This corresponds to generating the test signal at a particular phase terminal by means of a pulse width modulation by rapidly, with a modulation frequency, connecting this phase terminal to the different DC levels, in particular to DC voltage levels. This can be done in at least two ways:

- either by having the sub-states of each switching state following each other immediately, and repeatedly, after a measurement interval changing to another switching state with its own sub-states;
- or having sub-states of different switching states follow each other cyclically, thereby interleaving the sub-states of the switching states.

In a further embodiment, the test signal inverter is controlled to apply test signals to the different phase terminals separately and not necessarily interleaved. In order for the signals to be distinguishable by the measurements, the test signals generated are made to lie in different frequency ranges. The test signals can be generated by separate AC sources or by separate modulation, in the corresponding bridge, of at least one DC source, as already explained. Then, corresponding filters are arranged for the separate differential measurement circuits to receive only signals in the associated frequency range, that is, from the signal injected at a phase terminal distinct from the phase terminals at which the respective differential measurement is made.

In a further embodiment, the following steps are performed:

- generating the test signal by connecting, in each switching state, the one phase terminal to which the test signal is to be applied, to an AC signal source.

In this manner, the same signal source can be used to collect rotor position information from different machine phases(or phase groups) one after the other.

In an embodiment, the measurement arrangement and a drive circuit, arranged to provide the power that drives the electrical machine, are connected in **parallel** to the phase terminals of the electrical machine.

In an embodiment, the measurement arrangement is arranged in a **series** connection between the phase terminals of the electrical machine and a drive circuit, arranged to provide the power that drives the electrical machine.

An embodiment comprises a signal injection inverter comprising, for each of the phase terminals, an upper bridge branch connecting the phase terminal to an upper potential via an upper switch, and a lower bridge branch connecting the phase terminal to a lower potential via a lower switch, the upper or the lower bridge branches passing through a differential measurement unit which is arranged to perform differential **current** measurements between pairs of the respective bridge branches.

An embodiment comprises a signal injection circuit comprising, for each of the phase terminals, an upper bridge branch connecting the phase terminal to an upper potential via an upper switch, and a differential measurement unit which is arranged to perform differential **voltage** measurements between pairs of the phase terminals.

An embodiment comprises a common mode choke effecting a coupling between a current created by the test signal flowing into the phase terminals and a current created by the test signal flowing out of a star point of the electrical machine. As a result, the current created by the test signal experiences a minimal impedance when flowing through the choke in the direction indicated. Consequently, essentially no or negligible part of said current will flow through the drive circuit, and a drive filter can be omitted. Conversely, signals generated by the drive circuit shall be suppressed from flowing through the measurement arrangement, especially at higher frequencies, i.e. in the frequency range of the test signal and above.

Further embodiments are evident from the dependent patent claims. Features of the method claims may be combined with features of the device claims and vice versa.

The subject matter of the invention will be explained in more detail in the following text with reference to exemplary embodiments which are illustrated in the attached drawings, in which the figures show schematically:

| | |
|---|---|
| Figure 1 | a conceptual drawing of the signal injection - differential measurement method, showing different embodiments with and without the star point connection. |
| Figure 2 | a conceptual drawing of the signal injection method, where two measurement arrangements are shown, in a configuration where the star point of the machine <u>is not</u> accessible |
| Figure 3 | a conceptual drawing of the signal injection method, where one measurement arrangement is used and switched selectively between different machine phases, in a configuration where the star point of the machine <u>is not</u> accessible. |
| Figure 4 | a drive circuit driving the machine without star point access, and an additional measurement arrangement where the signal injection and differential current measurement circuits are shown. |
| Figure 5 | one way of realizing a differential current measurement using a current transformer. |
| Figure 6 | one way of realizing a differential current derivative measurement using a current transformer. |
| Figure 7 | another way of realizing a differential current derivative measurement using a current transformer. |
| Figure 8 | a drive circuit driving the machine without star point access, and two additional measurement arrangements where the signal injection and differential current measurement circuits are shown |
| Figure 9 | a drive circuit driving the machine without star point access, and an additional measurement arrangement where the signal injection and differential current measurement circuits are shown. One measurement arrangement is applied to different phase groups of the machine selectively using the switching circuit. |
| Figure 10 a | drive circuit driving the machine with star point access, and an additional measurement arrangement where the signal injection and differential voltage measurement circuits are shown. |
| Figure 11 | a drive circuit driving the machine with star point access, and an additional measurement arrangement where the signal injection and differential voltage |

measurement circuits are shown. One measurement arrangement is applied to different phase groups of the machine selectively using the switching circuit.

Figure 12 — one way of realizing a differential voltage measurement circuit using a differential amplifier arrangement.

Figure 13 — a drive circuit driving the machine without star point access, and an additional measurement arrangement where the signal injection circuit and the differential current measurement circuit are connected in series between the drive circuit and the motor.

Figure 14 — a drive circuit as in Figure 13, but without a filter on the drive side.

Figure 15 — a drive circuit driving the machine without star point access, and an additional measurement arrangement where the signal injection circuit is connected in series between the drive circuit and the motor and differential current measurement unit is connected in parallel.

Figure 16 — a realization of a signal injection circuit that can be connected in series between the motor and the drive circuit.

Figure 17 — a realization where an additional low power inverter is used to inject a test signal, without the star point connection.

Figure 18 — a realization similar to the one above, but with additional measurement side filters.

Figure 19 — a realization where an additional low power inverter is used to inject a test signal, with the star point connection.

Figure 20 — a realization where an additional low power inverter is used to inject a test signal, with the star point connection and the drive side filter is omitted.

Figure 21 — a realization similar to the one in Figure 17, but with only one inverter leg, injecting a test signal to one machine phase only.

Figure 22 — a realization of the three phase differential current measurement circuit.

Figure 23 — a realization of the three phase differential voltage measurement circuit.

Figure 24 — a drive circuit driving the machine without star point access, and an additional measurement arrangement where a three phase series signal injection circuit is connected in series and a three phase differential current measurement circuit is connected in parallel between the drive side filter and the electrical machine.

Figure 25 — a realization of the three phase series signal injection circuit.

Whereas the following embodiments show three-phase machines, the position detection method and apparatus are applicable to machines with different phase numbers as well.

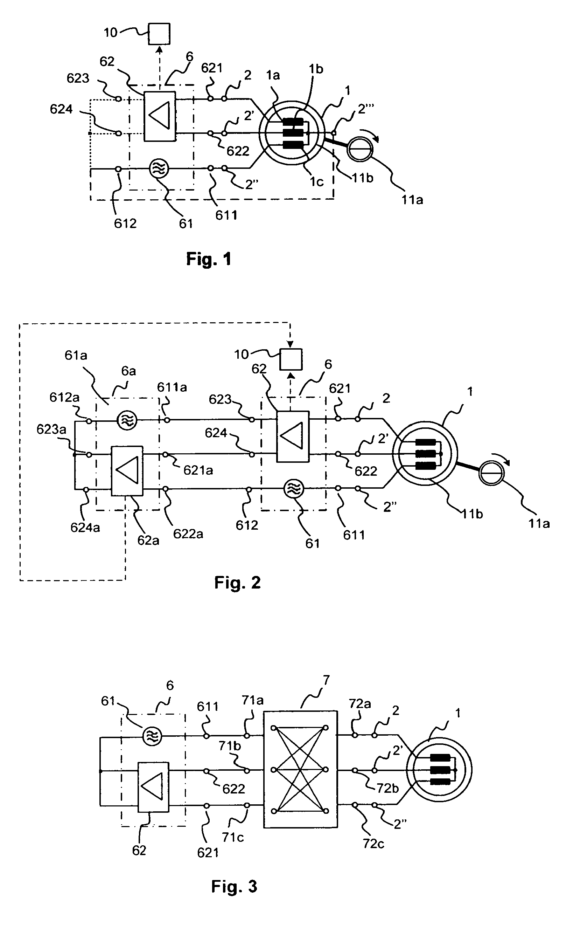

**Fig**. **1** shows a conceptual representation of different embodiments, with an electrical machine 1 with first, second and third phase terminals 2, 2', 2" and optionally a star point terminal 2"' whose first, second and third phases are denoted as 1a, 1b and 1c. The phase terminals 2, 2', 2" are connected to a measurement arrangement 6. Throughout the present application, it is understood that "connected" stands for "electrically connected". The measurement arrangement 6 comprises a measurement signal injection source 61 and a differential measurement circuit 62. One of the phase terminals 2" is connected to a first terminal or injection terminal 611 of the injection source 61, the other two phase terminals 2, 2' are connected to first and second input terminals 621, 622 of the differential measurement circuit 62. A second terminal or reference terminal 612 of the injection source 61 is connected either to one or more further terminals or output terminals 623, 624 of the differential measurement circuit 62 or to the star point terminal 2"'. A first part 11 a of the electrical machine is driven relative to a second part 11b, or vice versa. Depending on the construction of the machine, one of the two parts can be stationary ("stator") and the other one movable ("rotor"). It is evident that these first and second parts, although only drawn in Figs. 1 and 2 also are present in the configurations of the other Figures.

In general, the operation of measurement arrangement 6 relies on the dependencies of the electrical quantities such as the reactance and/or resistance, or collectively, the impedance of the electrical machine 1 on the position of its rotating or moving part (for the sake of simplicity, from this point on, only rotating electrical machines will be considered and the position of the rotating part will be denoted as rotor position. However, the described method can be used with any electrical machine topology, in particular in a linear motor, in machines with more than three phases, in machines with a delta configuration of the windings instead of a star configuration, etc.). First, a measurement signal (current or voltage) is injected into the electrical machine 1. Then, the corresponding response of the electrical machine I to the injected signal is measured differentially, using the differential measurement circuit 62 which can be configured as a differential current or voltage measurement circuit. This differentially measured signal (current or voltage) contains information about the rotor position of the electrical machine 1. The phase, amplitude or in general the waveform of those induced signals depend on the self-impedances and/or mutual magnetic coupling of the phase windings of the electrical machine 1, whose dependency on the rotor position is well known from electrical machinery theory. Differential measurements are used in order to exploit those dependencies even if they are extremely weak.

One way of using the measurement arrangement 6 is shown in **Fig. 1,** where the reference terminal 612 of the injection source 61 is connected to the star point terminal 2''' of the electrical machine 1, as designated by a dashed line. In this configuration, the injection source 61 injects a measurement signal (current or voltage) into the third phase terminal 2'' of the electrical machine 1 with respect to the star point terminal 2'''. This measurement signal injected into the electrical machine 1 induces electrical signals on the first and second phase terminals 2, 2' with respect to the star point terminal 2'''. The differential measurement circuit whose first and second input terminals 621, 622 are connected to the first and second phase terminals 2, 2' are used to measure differentially (i.e., the difference of) the induced signals on first and second phase terminals 2, 2'.

For further explanation of the above described concept, the following example can be considered. A current Iinj injected into phase terminal 2'' with respect to the star point terminal 2''' induces voltages Ua and Ub on the first and second phase terminals 2, 2' with respect to the star point terminal 2''', where

$$Iinj=Iinj,p*\sin(wt),$$

$$Ua=Lba*w*Iinj,p*\cos(wt),$$

$$Ub=Lbc*w*Iinj,p*\cos(wt),$$

where Lba and Lbc are the mutual magnetic couplings between machine phases 1a-1b and 1b-1c respectively.
A differential measurement circuit, configured as a differential voltage measurement circuit on the first and second phase terminals 2, 2', in this case, gives the difference of the induced voltages as

$$Uac=(Lba-Lbc)*w*Iinj,p*\cos(wt).$$

The amplitude of the differentially measured voltage Uac comprises information about the difference of the mutual magnetic couplings between the phases, and consequently also information about the rotor position of electrical machine 1.
A position estimating unit 10 is configured to determine an estimate of the relative position between the moving part and the stationary part of the electrical machine according to the procedure outlined above. The position estimating unit 10 is arranged to receive measurement information (dashed arrows) from the differential measurement circuit 62. The position estimating unit 10 can be implemented by an analog circuit or by a digital information processing unit. For the sake of simplicity, the position estimating unit 10 is drawn only in **Figs. 1** and **2.** It is evident that in the other embodiments, the position estimating unit 10 also is arranged to receive measurement information from the one or more differential measurement circuits 62, 62', 62'' and to determine the position therefrom. The position can be determined, for example, as with ordinary position sensors as described in previously mentioned references Mayer and Tan et al.
The actual implementation can use inverse tangent functions or look-up-tables.
In some cases, it might be undesirable or impossible to have access to the star point terminal 2''' of the electrical machine 1. In that case, the measurement arrangement 6 can be modified to follow the above described principle of signal injection and differential measurements, but in a configuration without the need of access to the star point terminal 2'''. One such configuration is shown in **Fig. 1,** where the reference terminal 612 of the injection source 61 is connected to the first and second output terminals 623, 624 of the differential measurement circuit 62, as designated by dotted lines. The star point terminal 2''' is not connected to the measurement arrangement 6. In this configuration, the injection source 61 injects a measurement signal into the third phase terminal 2'' with respect to the other phase terminals. The injected measurement signal flows through the third phase 1c and then is divided between the first and second phases 1a and 1b according to the self-impedances and the mutual couplings of these phases, which in turn are dependent on the rotor position of the electrical machine 1. The differential measurement circuit 62, which is connected to those phase terminals to which the injection source 61 is not connected, measures the response of the electrical machine 1 to the injected measurement signal differentially on those phase terminals to which the injection source 61 is not connected.
**Fig. 2** shows a conceptual representation of certain embodiments similar to those of **Fig. 1,** in which a second measurement arrangement 6a comprising a second injection source 61a and a second differential measurement circuit 62a is used in addition to the measurement arrangement 6. The measurement arrangement 6 is connected to the electrical machine 1 in same fashion as in **Fig.1,** whereas the injection terminal 611 a of the second injection source 61 a generating a second test signal and is connected to either the first output terminal 623 or the second output terminal 624 of the differential measurement circuit 62. The first and second input terminals 621 a, 622a of the second differential measurement circuit 62a are connected to the reference terminal 612 of the injection source 61 and to the one of the output terminals 623 or 624 of the differential measurement circuit 62, which is not connected to the injection terminal 611 a of the second injection source 61 a. The output terminals 623a, 624a of the second differential measurement circuit 62a are connected to the reference terminal 612a of the second injection source 61 a.

The principle of operation of the certain embodiments conceptually represented in **Fig. 2** is similar to that of the embodiments represented in **Fig. 1** without utilizing the star point terminal 2'" (dotted lines). However, using two measurement arrangements instead of one, information about the rotor position is collected from two different phase groups instead of one, allowing for a more exact rotor position measurement and making it possible to detect the direction of rotation as well. Even if it is not depicted, it is clear that the configuration of the measurement arrangement 6 in **Fig. 1** where the star point terminal 2'" is used for signal injection can also be duplicated and connected to the phases differently, i.e. injecting into another phase and measuring at corresponding remaining phases, to collect rotor position information on more than one phase group and hence allow for a more exact rotor position measurement and make it possible to detect the direction of rotation as well.

**Fig. 3** shows a conceptual representation of certain embodiments which are essentially similar to those of **Fig. 1,** where a measurement switching circuit 7 with input terminals 71a, 71b, 71c and output terminals 72a, 72b, 72c is connected in between the measurement arrangement 6 and the electrical machine 1, such that the input terminals 71a, 71b and 71c are connected to the signal injection terminal 611 and the input terminals 621 and 622 of the differential measurement circuit 62 and the output terminals 72a, 72b and 72c are connected to the phase terminals 2, 2' and 2". The measurement switching circuit 7 operates such that any of its input terminals 71 a, 71 b, 71c can be connected to any of its output terminals 72a, 72b, 72c, whereby only one input terminal can be connected to one output terminal at a time and each of the input terminals is connected to one output terminal. Therefore, the injection source 61 and the differential measurement circuit 62 can be connected selectively to different phase terminals of the electrical machine 1, and according to different permutations. Using this configuration, only a single measurement arrangement 6 can be used to collect rotor position information from more than one phase groups at different time intervals. Even if it is not depicted, it is clear that the configuration of measurement arrangement 6 in **Fig. 1** where the star point terminal 2'" is used for signal injection can also be used with the measurement switching circuit 7 in order to to collect rotor position information on more than one phase group selectively.

For all embodiments of the present application, it holds that the typical range for the fundamental component of the drive signal is within 0 - 16 kHz whereas a typical range for injection frequency is within 10 kHz - 5 MHz and a typical range for the intervals of the measurement switching circuit (measurement intervals) is within 1 us - 100 ms. In the cases when the test signal is generated by a modulation scheme, the modulation frequency is at least equal to the injection frequency or is higher, depending on the modulation scheme.

**Fig**. **4** shows an embodiment with a drive circuit 4, whose input terminals 41, 42 are connected to a constant DC voltage source 5. A first, second and third output terminal 4a, 4b, 4c of the drive circuit 4 are connected to a first, second and a third input terminal 3a, 3b, 3c of a drive side filter 3. A first, second and third output terminals 3a', 3b', 3c' of the drive side filter are connected to the phase terminals 2, 2', 2" of the electrical machine 1. A measurement arrangement 6' of a first type, comprising the injection source 61 and a differential current measurement circuit 62', is connected to the electrical machine 1 though a measurement side filter 8, whose input terminals 8a, 8b, 8c are connected to the injection terminal 611 and to a first and second input terminal 621', 622' of the differential current measurement circuit 62'. The reference terminal 612 of the injection source 61 is connected to a first and a second output terminal 623', 624' of the differential current measurement circuit 62'. A first, second and third output terminal 8a', 8b', 8c' of the measurement side filter 8 are connected to the machine terminals 2, 2', 2", respectively. The measurement side filter 8 comprises, for example, a first, second and third impedance 81, 82, 83 connecting respective input and output terminals. These impedances may or may not be magnetically (inductively) coupled to each other. The drive circuit 4 generates the drive signals (currents or voltages) generating torque in the electrical machine 1. The drive side filter 3, preferably configured as but not limited to lowpass, band-stop or a combination thereof, dampens the harmonics caused by the switching of the drive circuit 4. The measurement side filter 8 is used for stopping the drive signals from entering the measurement arrangement 6'. A test current generated by the injection source 61 is guided, through the first phase terminal 2, into the machine according to the ratio of the impedances of the drive side filter 3 and the electrical machine 1. This current is divided in two paths in the electrical machine 1, one path going through the second phase terminal 2' and the other through the third phase terminal 2". Those two components of the test current are blocked at least in part, or fully blocked by the drive side filter 3, and go through the measurement side filter 8 and their difference is measured using the differential current measurement circuit 62'.

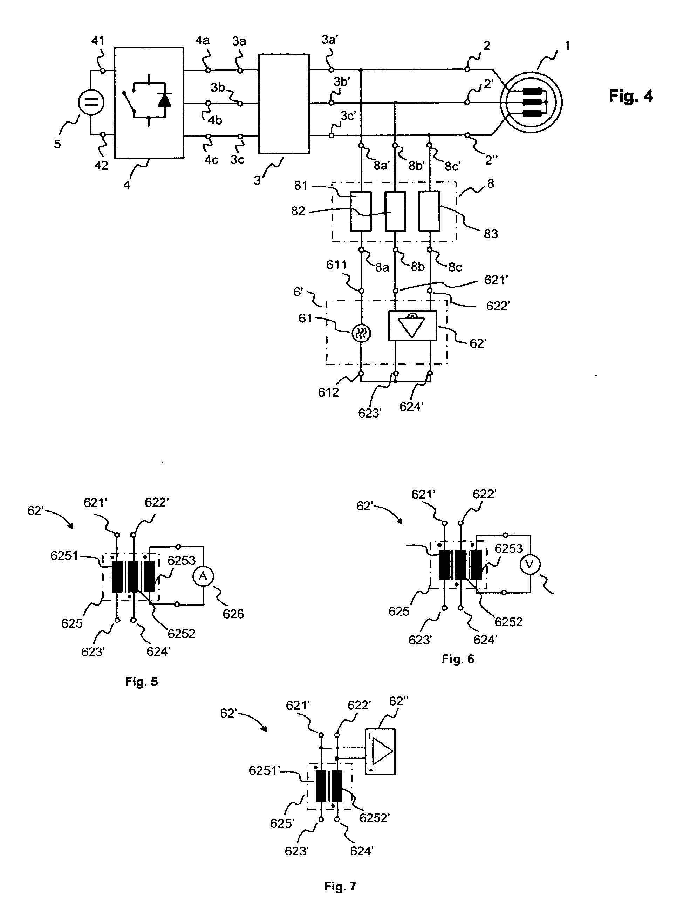

**Figs. 5** to **7** show different embodiments realizing a differential current measurement circuit 62'. Each differential current measurement circuit 62' comprises a first and second input terminal 621', 622' and a first and second output terminal 623', 624'. In the embodiment of **Fig. 5,** a differential transformer 625 is connected with a first winding 6251 between the first input terminal 621' and the first output terminal 623' and a second winding 6252 wound in the opposite direction between the second input terminal 622' and the second output terminal 624'. A third winding 6253 has both ends connected to a current measurement element 626.

Using the embodiment shown in **Fig. 5,** the difference of the currents flowing through the windings 6251 and 6252 is measured directly by the current measurement element 626, without any measurement offsets that could be coming from practical measurement tools if those currents were measured separately and their difference was calculated as a further step from the measurements.

**Fig. 6** shows an embodiment with essentially the same structure as **Fig. 5,** but with a voltage measurement element 627 in place of the current measurement element. In this circuit, the flux linked by the winding 6253 is the difference of the fluxes created by the currents flowing through windings 6251 and 6252, meaning that the voltage measurement element 627 measures the derivative (over time) of the difference of those two currents. This is based on the elementary fact that the voltage over a winding is proportional to the derivative (over time) of the current through the winding. The inner working of the position estimation unit 10 is adapted to the type of measurement (i.e. current or voltage).

**Fig. 7** shows an embodiment with a differential transformer 625' connected with a first winding 6251' between the first input terminal 621' and the first output terminal 623' and a second winding 6252' wound in the opposite direction between the second input terminal 622' and the second output terminal 624'. A differential voltage measurement circuit 62" with a difference amplifier is connected to the two input terminals 621', 622'. The operating principle of this circuit is essentially the same as in **Fig. 6,** with the only difference being that the the difference of the derivatives of the currents through 6251' and 6252' is measured directly on the windings using a difference amplifier.

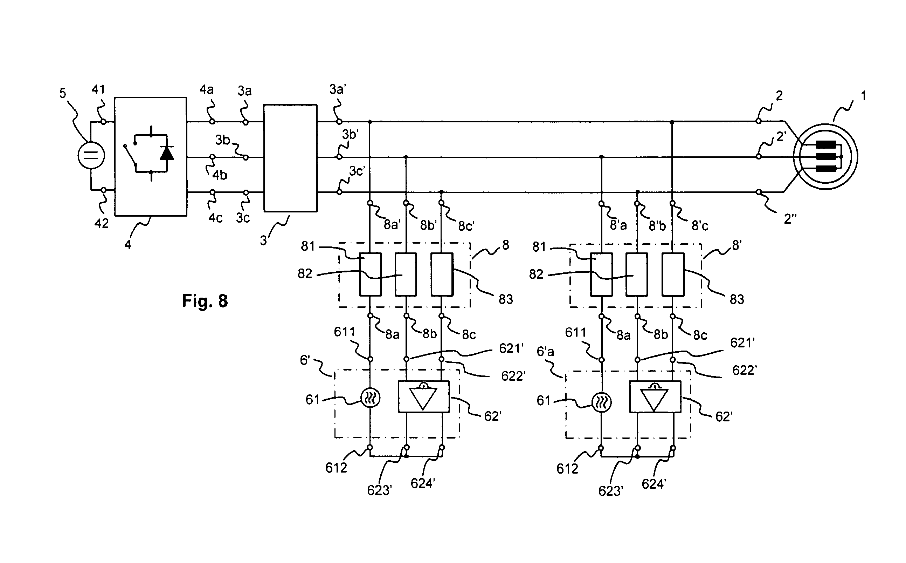

**Fig. 8** shows an embodiment with similar structure to **Fig. 4,** but with an additional measurement side filter 8' and an additional measurement arrangement 6'. The additional measurement arrangement 6'a and the associated additional measurement side filter 8' are structured and connected to each other in the same way as the measurement arrangement 6' and measurement side filter 8 already shown in **Fig. 4.** Unlike **Fig. 4,** the connections from the output terminals of the additional measurement side filter 8' to the phase terminals are rotated, that is, first, second and third output terminals 8'a, 8'b, 8'c of the additional measurement side filter 8' are connected to the second, third and first phase terminals 2', 2", 2 respectively.

The operation of this circuit is similar to that of **Fig. 4,** but with an additional measurement done on a different phase group of the electrical machine 1. Rotor position information is thus collected from more than one phase group of the electrical machine 1, making it possible to have a more exact rotor position measurement and to detect the direction of rotation as well.

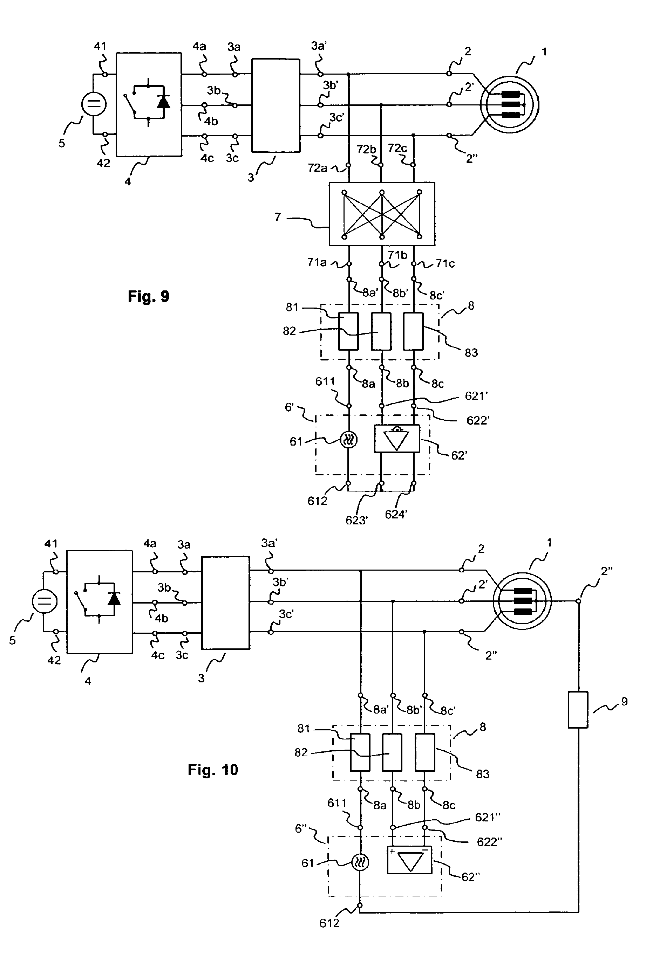

**Fig. 9** shows an embodiment where the structure is essentially the same as **Fig. 4,** with an additional measurement switching circuit 7 connected between the measurement side filter 8 and the electrical machine 1. The input terminals 71a, 71b, 7c of the measurement switching circuit 7 are connected to the output terminals 8a', 8b', 8c' of the measurement side filter 8. The output terminals 72a, 72b, 72c of the measurement switching circuit are connected to the phase terminals 2, 2', 2".

The operation the circuit is similar to that of **Fig. 4,** but the injection source 61 and the differential current measurement circuit 62' can be connected to different phase terminals selectively (through measurement side filter 8), by using the measurement switching circuit 7. Hence, rotor position information can be collected from more than one phase groups at slightly different times, making it possible to have a more exact rotor position measurement to detect the direction of rotation as well.

**Fig. 10** shows an embodiment where the star point connection of the electrical machine 1 is utilized for test signal injection. The DC voltage source 5, the drive circuit 4, drive side filter 3, the electrical machine 1 and the measurement side filter 8 are connected to each other in the same way as shown in **Fig. 4.** A measurement arrangement 6" of a second type, comprising the injection source 61 and a differential voltage measurement circuit 62" is used instead of the measurement arrangement 6' of the first type of **Fig. 4.** A star point filter circuit 9 -which may or may not be magnetically coupled to one or more filter impedances of the measurement side filter 8- is connected between the star point terminal 2"' and the reference terminal 612 of the injection source 61. A first and second input terminal 621 ", 622" of the differential voltage measurement circuit 62" are connected to the two of input terminals of the measurement side filter 8. The remaining third input terminal of the measurement side filter 8 is connected to the injection terminal of the injection source 61.

The operation principle of the DC voltage source 5, the drive circuit 4, the drive side filter 3 as well as the measurement side filter 8 are the same as in **Fig. 4.** The injection source 61 injects a test signal into the phase terminal 2 with respect to the star point terminal 2"', through the measurement side filter 8 and the star point filter 9. The star point filter 9 is a filter circuit configured such that it shows low impedance to the injected test signal and high impedance to the drive signals. In this configuration, the injected test signal creates a test current flowing between the first phase terminal 2 and the star point terminal 2". This test current induces voltages on second and third phase terminals 2', 2" with respect to the star point terminal 2"', according to the mutual magnetic couplings in the electrical machine 1. The difference of those induced voltages is measured by the differential voltage measurement circuit 62", through the measurement side filter 8.

In some cases, a magnetic coupling can be present between the star point filter circuit 9 and the measurement side filter 8 (e.g. forming a *common mode choke*), which can allow to remove the drive side filter 3. This can be explained easily with the example of **Fig. 10:** A magnetic coupling between the filter impedance 81 and the star point filter circuit 9 forms a *common mode choke*. In this configuration, the injected test current can be guided into the machine (and hence stopped from going into the drive circuit 4) by the help of this common mode choke formed by the above-mentioned magnetic coupling. The reason is simply that a test current path from the injection terminal 611, through the filter impedance 81, phase terminal 2, star point terminal 2''' and the star point filter circuit 9 does not see the additional impedance of the above-described *common mode choke*, unlike any alternative current path (e.g. test current flowing into the drive circuit 4).

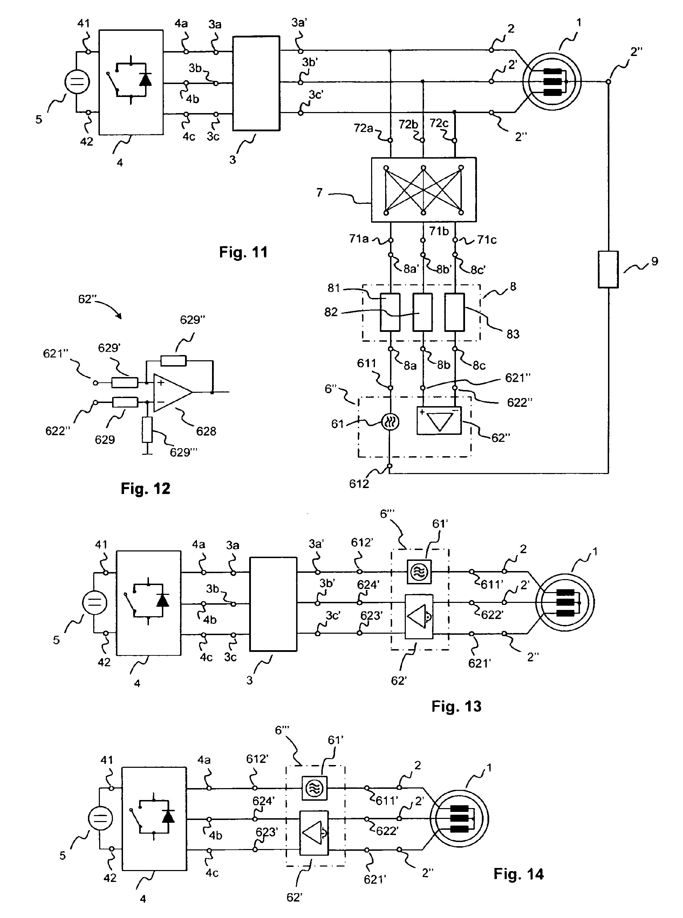

It is should be clear to those skilled in art that the use of magnetic couplings between various filter impedances can be utilized in similar way also in some of the embodiments described above and below (for example **Fig. 4** or **Fig. 11**), with the same purpose and effect.

**Fig. 11** shows an embodiment where the structure is essentially the same as **Fig. 10,** with an additional measurement switching circuit 7 connected between the measurement side filter 8 and the electrical machine 1. The input terminals 71 a, 71 b, 7c of the measurement switching circuit 7 are connected to the output terminals 8a', 8b', 8c' of the measurement side filter 8. The output terminals 72a, 72b, 72c of the measurement switching circuit are connected to the phase terminals 2, 2', 2''.

The operation the circuit is similar to that of **Fig. 10,** but the injection source 61 and the differential voltage measurement circuit 62'' can be connected to different phase terminals selectively (through measurement side filter 8), by using the measurement switching circuit 7. Hence, rotor position information can be collected from more than one phase groups (at different times); allowing for a more exact rotor position measurement and making it possible to detect the direction of rotation as well.

**Fig. 12** shows an embodiment realising a differential voltage measurement circuit 62'' where an operational amplifier 628 is used along with impedances 629, 629', 629'', 629''' in a well-known difference amplifier circuit topology. Using this circuit, the difference of the voltages at input terminals 621', 622'' can be measured directly, rather than measuring them separately and calculating the difference.

**Fig. 13** shows an embodiment where the DC voltage source 5, the drive circuit 4 and the drive side filter 3 are connected to each other in the same way as shown in **Fig. 4.** A measurement arrangement 6''' of a third type comprising a series injection source 61' with an injection terminal 611' and reference terminal 612'; and the differential current measurement circuit 62' is connected between the drive side filter 3 and the electrical machine 1. The output terminals 3a', 3b', 3c' of the drive side filter 3 are connected to the reference terminal 612' of the series injection source 61' and output terminals 624', 623' of the differential current measurement circuit 62'. The injection terminal 611' of the series injection source is connected to the first phase terminal 2 and input terminals 622' and 621' of the differential current measurement circuit 62' are connected to the second and third phase terminals 2', 2''.

The operation principle of the DC voltage source 5, the drive circuit 4, and the drive side filter 3 are the same as in **Fig. 4.** In this embodiment, the drive signals go through the measurement arrangement 62'. The series injection source 61' superimposes the test signals onto the drive signals that are applied to the first phase terminal 2. The differential current measurement circuit 62' measures the difference of drive current components as well as the test currents, and therefore a further filtering stage is required to filter out the drive current components from the measured differential current. The return path for the injected test signal can be through the drive side filter 3, the drive circuit 4 or the DC voltage source 5.

**Fig. 14** shows an embodiment which is the same as **Fig. 13,** but with the drive side filter 3 being omitted. The operation principle of the circuit is the same as that of **Fig. 13.**

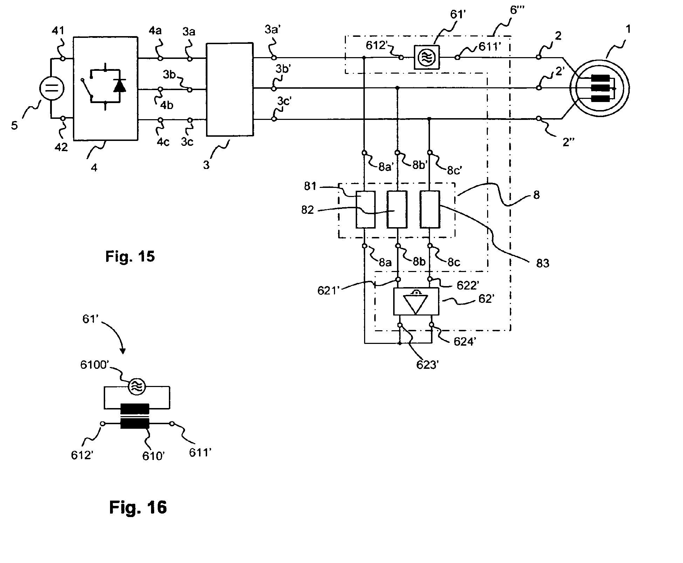

**Fig. 15** shows an embodiment where the DC voltage source 5, the drive circuit 4 and the drive side filter 3 are connected to each other in the same way as shown in **Fig. 4.** The measurement arrangement 6''' is of the third type. The series injection source 61' is connected in the same way as in **Fig. 13.** The second and third input terminals 8b, 8c of the measurement side filter 8 are connected to the input terminals 621', 622' of the differential current measurement circuit. The output terminals 623', 624' of the differential current measurement circuit 62' are connected both to the first input terminal 8a of the measurement side filter 8. The first output terminal 8a' of the measurement side filter is connected to the reference terminal 612' of the series injection source 61', and the other (second and third) output terminals 8b', 8c' of the measurement side filter 8 are connected to the second and third phase terminals 2' and 2''. In a variant of this embodiment, the differential current measurement circuit 62' is replaced by a differential voltage measurement for the voltage between the second and third input terminals 8b, 8c.

The operation of the circuit is similar to that of **Fig. 14.** However, the differential current measurement circuit 62' is connected to the electrical machine 1 through the measurement side filter 8, meaning that it does not measure the drive current components as in **Fig. 13.** Furthermore, the connection of the reference terminal 612' of the series injection source 61' to the output ports 623', 624' of the differential current measurement circuit 62' through the measurement side filter 8 forms the return path for the injected test signal, hence it does not flow through the drive side filter 3 or the drive circuit 4. As a consequence, the circuit can operate also without the drive side filter 3.

**Fig. 16** shows an embodiment realizing the series injection source 61'. The terminals of a first winding of a transformer 610' constitute the reference terminal 612' and the injection terminal 611. A second winding of the transformer is connected to a signal source 6100'. The signal source 6100' can be realized in different ways including a switching arrangement with a rectangular voltage output, or a sinusoidal voltage generator (i.e. and oscillator). The test signal from the signal source 6100' is superimposed onto the drive signals using the injection transformer 610'.

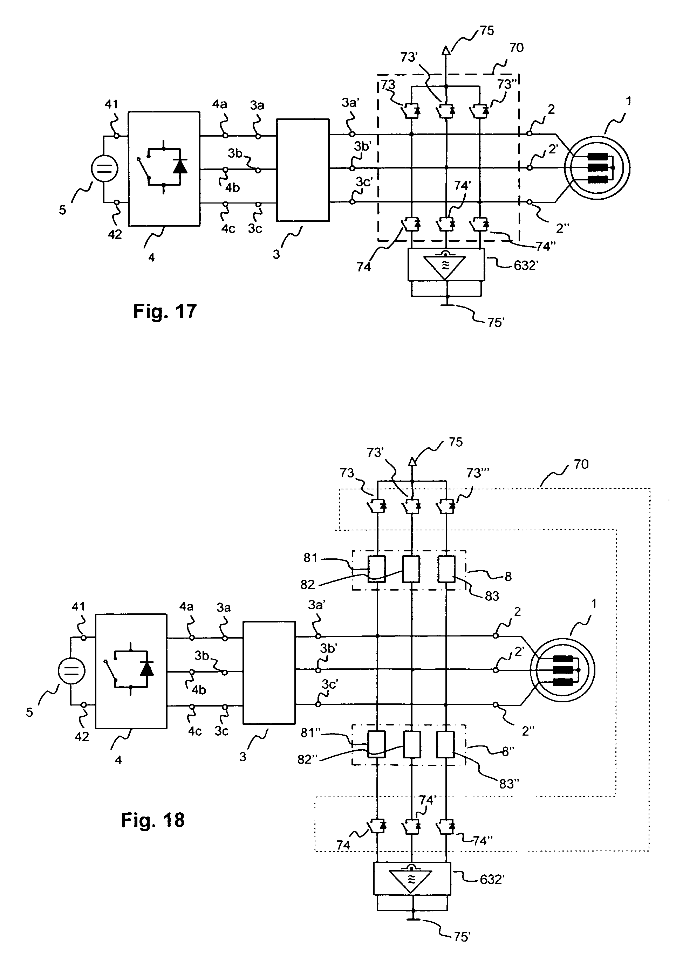

**Fig. 17** shows an embodiment where the DC voltage source 5, the drive circuit 4 and the drive side filter 3 are connected to each other in the same way as shows in Fig. 4. An additional three phase inverter 70 comprising a first, a second and a third upper switch 73, 73', 73" and a first, a second and a third lower switch 74, 74', 74" is connected between the drive side filter 3 and the machine 1. The first upper and the first lower switch are part of a first bridge leg, and similarly the second and third switches are part or a second and third bridge leg, respectively. Each bridge leg has an upper half and a lower half. Respective first terminals of the upper switches 73, 73', 73" are connected to an injection voltage level 75 or bus. Second terminals of the first, second and third upper switches 73, 73', 73" are connected, respectively, to a first terminal of the first, second and third lower switches 74, 74', 74", which are also connected to the first, second and third machine terminals 2, 2', 2" and the first, second and third output terminals 3a', 3b', 3c' of the drive side filter 3, respectively. Second terminals of the first second and third lower side switches 74, 74', 74" are connected to a first, second and a third input terminal of the three phase differential current measurement circuit 632', respectively. A first, a second and a third output terminal of the three phase differential current measurement circuit 632' are connected to an injection voltage reference bus or level 75'.

In all the embodiments, the voltage between the injection voltage level 75 and the injection voltage reference level 75' can be a dc voltage, an ac voltage, or a superposition of both. The first, second and third upper switches 73, 73', 73" as well as the first, second and third lower switches, 74, 74', 74"' are depicted as switches with one directional voltage blocking capability but they can be replaced by switches or switch combinations which allow bi-directional voltage blocking.

The operation principle of the DC voltage source 5, the drive circuit 4, and the drive side filter 3 are the same as in **Fig. 4.** The test signal is injected to the machine using different switching combinations of the additional inverter 70.

In a **first** example where the voltage between the injection voltage level 75 and the injection voltage reference level 75' is assumed to be a dc voltage, in order to apply the test signal to the first phase terminal 2 with respect to the second and third phase terminals 2', 2"; in a first switching sub-state the first upper switch 73 and the second and third lower switches 74', 74" are turned on, the other switches of the additional inverter 70 being turned off. In a second switching sub-state, only the second and third upper switches 73', 73" and the first lower switch 74 are turned on. These two switching sub-states can be applied consecutively for a period of time, which corresponds to the test signal being applied to the first phase terminal 2 with respect to the second and the third phase terminals 2', 2". The frequency and/or waveform of the test signal is defined by the frequency with which the switching between the sub-states takes place. After said period of time, a different switching state with corresponding different switching sub-states can be applied (that is, a new set of upper and lower switches being switched on) for applying the test signal to a different phase terminal, with respect to two further phase terminals, and so on for further switching states. In other words, this first example corresponds to generating a pulsed signal at a first phase terminal and measuring a current or a voltage at two other phase terminals for a period of time, and then repeating this subject to a permutation of the phases.

In a **second** example where the voltage between the injection voltage level 75 and the injection voltage reference level 75' is assumed to be an ac voltage corresponding to the test signal, the switching pattern in a switching state stays similar to what is described above, however, but no switching between sub-states is required. A single switching state is enough to apply the test signal to a selected phase terminal with respect to two further phase terminals. For example, turning on

- either only the first upper switch 73 and the second and third lower switches 74', 74";
- or only the second and third upper switches 73', 73" and the first lower switch 74

are sufficient in this example to apply the test signal to the first phase terminal 2 with respect to the second and third phase terminals 2', 2"; whereas in the first example, those two switching states are required to be applied consecutively.

In a **third** example where the voltage between the injection voltage level 75 and the injection voltage reference level 75' is assumed to be a dc voltage, switch states for applying the signal to different phases terminals with respect to corresponding remaining two phase terminals (as described above) can follow by each other immediately. Unlike the switching pattern described in the first example, the upper and lower switches can be switched such that, for example, the test signal first is applied to the first phase terminal 2 with respect to the second and third phase terminals 2', 2" and immediately afterwards the test signal is applied to the second phase terminal 2', with respect to the first and third phase terminal 2, 2", and so on for the third and then again the first phase terminal, etc. In other words, this third example corresponds to generating a signal pulse at one phase terminal at a time and measuring a current or a voltage at two other phase terminals, and interleaving such pulses subject to a permutation of the phase terminals.

The three phase differential measurement circuit 632', whose structure and principle of operation are described below, is used to make differential measurements on the correct phase terminal group, depending on the states of the switches of the additional inverter 70 (for example, for the period of time described in the second example, the correct phase terminal group would be the second and third phase terminals 2', 2").

**Fig. 18** shows an embodiment which is essentially the same as **Fig. 17,** with the only difference being the use of a first and a second measurement side filter 8, 8", each comprising a first, second and a third filter impedance 81, 82, 83 and 81 ", 82", 83". A first, second and third input terminal of the first measurement side filter 8 are connected to the second terminals of the first, second and third upper switches 73, 73', 73"; and its first second and third output terminals are connected to the first, second and third phase terminals 2, 2', 2". A first, second, and third input terminal of the second measurement side filter 8" are connected to the first, second and third phase terminals 2, 2', 2" whereas its first, second and third output terminals are connected to the first terminals of the first, second and the third lower switches 74, 74', 74".

The operation of the circuit is the same as that of the circuit in **Fig. 17,** where the measurement side filters 8 and 8" stop the drive signals going through the switches of the additional inverter 70 and/or the three phase current measurement circuit 623'.

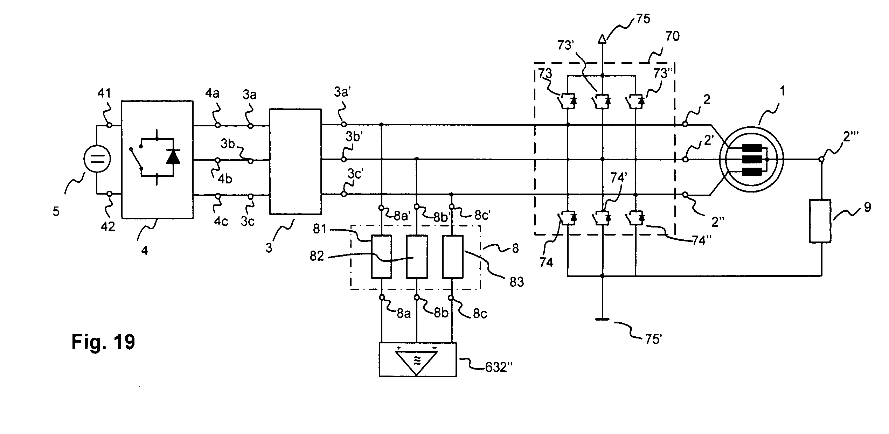

**Fig. 19** shows an embodiment where the DC voltage source 5, the drive circuit 4 and the drive side filter 3 are connected to each other in the same way as shown in **Fig. 4.** An additional inverter 70 is connected to them similarly as in **Fig. 17,** but with the three phase differential current measurement circuit 632' not being present and the second end of the lower switches 74, 74', 74" being connected to each other and to the reference voltage level 75'. The star point terminal 2'" is connected to the injection reference voltage level 75' through a star point filter 9. First, second and third terminals of a three phase differential voltage measurement circuit 632" are connected to the first, second and third output terminals 8a, 8b, 8c of a measurement side filter 8, whose first, second and third input terminals 8a', 8b', 8c' are connected to the first, second and the third phase terminals 2, 2', 2".

The operation of the circuit is the similar to that of the circuit in **Fig. 17,** and the three examples discussed for **Fig. 17** can be adapted also in this embodiment. However, here the test signal is injected to one of the machine phase terminals with respect to the star point terminal 2'" of the machine. The phase terminal where the test signal is applied to or injected is selected by turning on only one of the upper switches 73, 73', 73" or only one of the lower switches 74, 74', 74" at a time. As an example, when the voltage between the injection voltage level 75 and the injection voltage reference level 75' is a dc voltage, then the test signal is applied to the first phase terminal 2 with respect to the star point terminal 2'" by turning on the first upper switch 73 and the first lower switch 74' consecutively. When an ac voltage is present between the injection voltage level 75 and the injection voltage reference level 75', turning only the first upper switch 73 on is sufficient for applying the test signal to the first phase terminal 2 with respect to the star point terminal 2'". In this case, the lower switches 74, 74', 74" can be omitted.

The induced voltage on the two further phase terminals where the test signal is not applied to is read differentially by the three phase differential voltage measurement circuit 632", whose structure and principle of operation are described below.

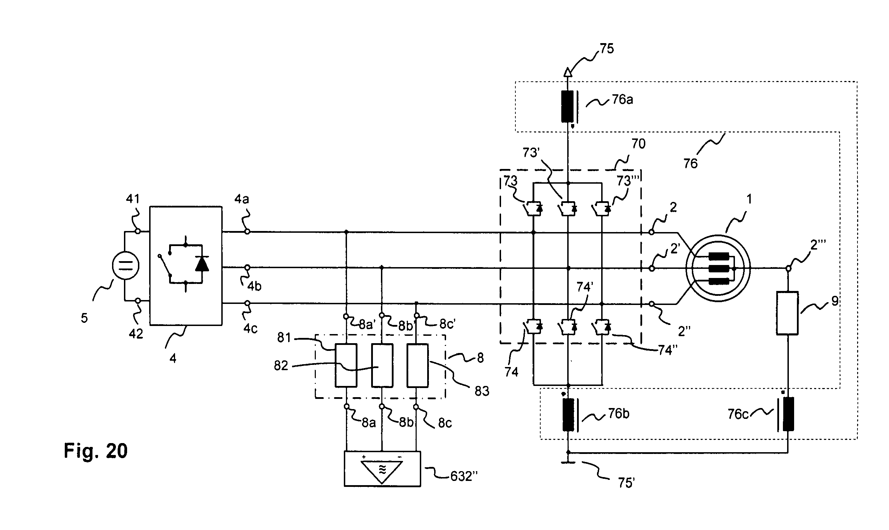

**Fig. 20** shows an embodiment essentially the same as the one in **Fig. 19,** but with the drive side filter 3 being omitted and a three winding common mode choke 76 compromising a first, second and third winding 71 a, 76b, 76c being used. The first winding 76a is connected between the injection voltage level 75 and the upper switches of the additional inverter 70. The second winding 76b is connected between the lower switches of the additional inverter 70 and the injection voltage reference level 75' and the third winding 76c is connected between the star point terminal 2'" and the injection voltage reference level 75'. The windings 76a, 76b, 76c are arranged such that a current in the first winding 76a in the direction into the injection voltage level 75, or a current in the second winding 76b in the direction into the injection voltage reference level 75' create a flux in the opposite direction of the flux that a current in the third winding 76c in the direction into the star point filter circuit 9 creates.

The operation of this circuit is the same as the circuit shown in **Fig. 19.** The use of the common mode choke 76 allows for removing the drive side filter 3, as described for **Fig. 10.** Also due to the common mode choke 76, the injection voltage reference level 75' does not need to be isolated, i.e., it can be connected, for example, to the input terminal 42 of the drive circuit 4. Similar to **Fig. 19,** in the case of an ac voltage between the injection voltage level 75 and the injection voltage reference level 75', the lower switches 74, 74', 74" and the second winding 76b of the three winding common mode choke 76 can be omitted.

It is evident that different combinations of the embodiments in **Fig. 17, 18** and **Fig. 19** are possible, i.e., omitting either one or both of the drive side filter 3 and the measurement side filter 8, or using them both together, as well as adding variants of the common mode choke 76 to the circuit.

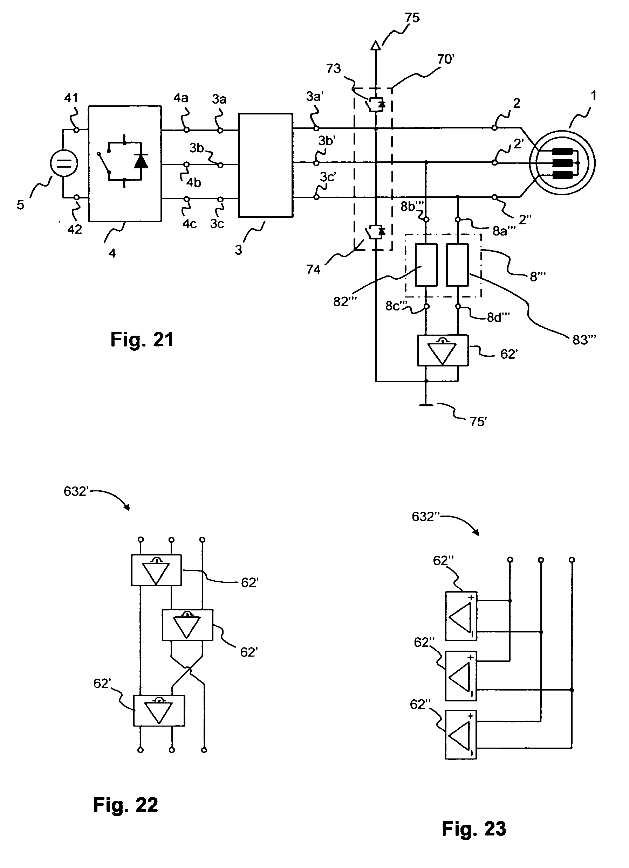

**Fig. 21** shows an embodiment where the DC voltage source 5, the drive circuit 4, the drive side filter 3 and the electrical machine 1 are connected to each other in the same way as shown in **Fig. 17.** A one phase inverter leg 70' comprising an upper switch 73 and a lower switch 74 connected to the first phase terminal 2 is used instead of the additional inverter 70. A first and second input terminal 8a'", 8b'" of a two phase measurement side filter 8'" comprising filter impedances 82'" and 83'" (which may or may not be magnetically coupled) are connected to a second and third phase terminal 2', 2". A first and second output terminal 8c''', 8d''' are connected to the injection voltage reference level 75' through a differential current measurement circuit 75'.

The principle of operation is similar to that of **Fig. 17,** but here, as only one upper and one lower switch are present, the test signals can only be applied to the first phase terminal 2 with respect to the second and third phase terminals 2', 2". The two phase measurement side filters 8''' block the drive signal components from going into the differential current measurement circuit 62'.

**Fig. 22** shows an embodiment realizing a three phase differential current measurement circuit 632'. Essentially, it comprises three individual differential current measurement circuits 62' as already presented above, each configured to measure the difference of the currents flowing through a first and a second, a first and a third and a second and a third inputs of the three phase differential current measurement circuit 632'.

**Fig. 23** shows an embodiment realizing a three phase differential voltage measurement circuit 632". Essentially, it comprises three individual differential voltage measurement circuits 62", each configured to measure the difference of the voltages between a first and a second, a first and a third and a second and a third inputs of the three phase differential voltage measurement circuit 632".

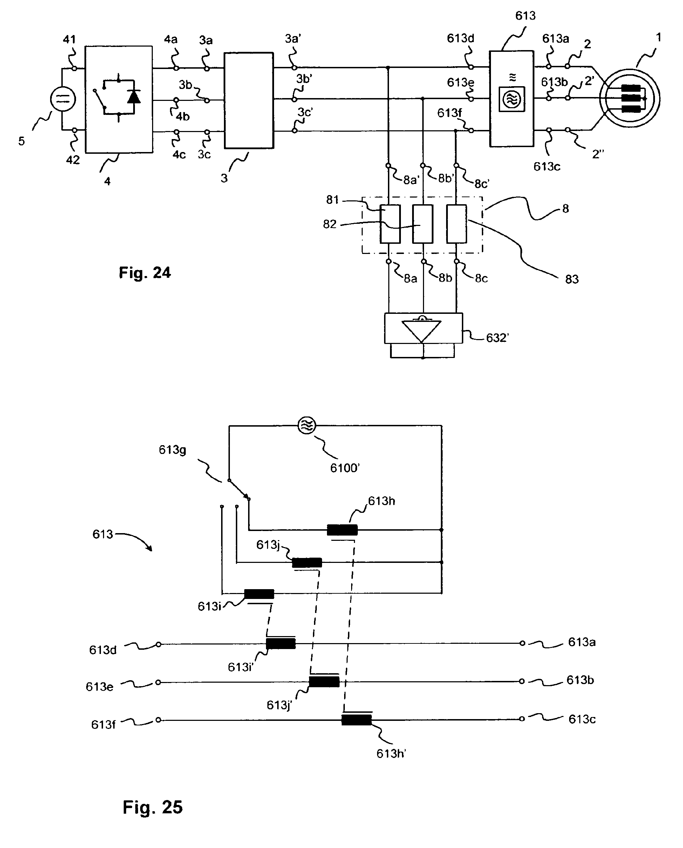

**Fig. 24** shows an embodiment where the DC voltage source 5, the drive circuit 4 and the drive side filter 3 are connected to each other in the same way as shown in **Fig. 4.** A first, second and third input terminal 613d, 613e, 613f of a three phase series signal injection circuit 613 are respectively connected to a first, second and third output terminal 3a', 3b', 3c' of the drive side filter 3. A first, second and third output terminal 613a, 613, 613c of the three phase series signal injection circuit 613 are respectively connected to the phase terminals 2, 2', 2". A first, second and third input terminal 8a', 8b', 8c' of a measurement side filter 8 are connected to the first, second and third output terminals 3a', 3b', 3c' of the drive side filter 3. The first, second and third output terminals 8a, 8b, 8c of the measurement side filter 8 are connected to the first, second and third input terminals of the three phase differential current measurement circuit 632'. The output terminals of the three phase differential current measurement circuit 632' are connected together.

The operation of the circuit of similar to that of the circuit shown in **Fig. 15,** where only one series signal injection circuit 61' is shown with one differential current measurement circuit 62'. Here, a three phase series signal injection circuit is used to to duplicate the signal injection method of **Fig. 15** to apply a signal to all three machine phases. A three phase differential current measurement circuit 632' is used, meaning that differential current measurements are done on all phase pairs, which leads to a complete duplication of the method shown in **Fig. 15** to all the machine phases.

**Fig. 25** shows a possible realization of the three phase series injection circuit 613. A first, second and a third transformer each with a primary winding 613h', 613j', 613i' and a secondary winding 613h, 613j, 613i are used. First ends of the first, second and third primary windings 613h', 613j', 613i' are connected to the input terminals 613f, 613e, 613d of the three phase series signal injection circuit 613. Second ends of the first, second and third primary windings 613h', 613j', 613i' are connected to the output terminals 613c, 613b, 613a of the three phase series signal injection circuit 613. A first end of a signal source 6100' is connected to a first end of the either of the first, second or third secondary windings 613h, 613j, 613i, by the help of an injection selector switch 613g. A second end of the first, second and third secondary windings 613h, 613j, 613i and the signal source 6100' are connected together. The signal source can be applied selectively to one of the secondary windings 613h, 613j, 613i, meaning that the operation of the circuit is similar to that of the circuit shown in **Fig. 16,** whereas here the signal can be applied to any selected machine phase. Alternatively, there can be three separate sources rather than one, each source being connected to one of the first, second or third secondary windings 613h, 613j, 613i.

## Claims

1.   A **method** for detecting the position of a first part (11 a) of an electrical machine (1) relative to a second part (11b) by applying an electrical test signal to the electrical machine (1) and measuring a resulting electrical response of the electrical machine (1) to the applied test signal, comprising the steps of

   • applying the test signal to one phase terminal (2") of the electrical machine (1), with respect to a star point (2''') of the machine, or with respect to at least two other phase terminals (2, 2') of the electrical machine (1);
   • performing a differential measurement of a response to the test signal on at least two phase terminals (2, 2') of the electrical machine (1), wherein these two phase terminals are different from the phase terminal (2") to which the test signal is applied;
   • determining, from a result of the differential measurement, an estimate of the relative position of the second and the first part (11 a, 11b).

2.   The method of claim 1, comprising **simultaneously** performing the same steps of applying a test signal and performing a differential measurement, but with a further test signal, applying the further test signal to a different phase terminal than the test signal, and performing a further differential measurement at corresponding different phase terminals, and determining the estimate of the relative position from the results of both differential measurements.

3. The method of claim 1, comprising **sequentially** applying the test signal to different phase terminals and performing a further differential measurement at corresponding different phase terminals, and determining the estimate of the relative position from the results of two or more such sequentially performed differential measurements.

4. The method of one of the preceding claims, comprising the step of generating the test signal by a circuit (61; 61'; 70) that is distinct from a drive circuit driving the electrical machine (1), and wherein the circuit is a multiphase inverter or a three phase inverter (70) performing the steps of repeatedly switching between different switching states, wherein in each switching state the test signal is applied to one of the phase terminals and the differential measurement is performed on two other phase terminals.

5. The method of claim 4, comprising the steps of

   • either generating the test signal by modulating a DC signal by switching between sub-states of each switching state, connecting the one phase terminal to which the test signal is to be applied to different DC signal levels by switching the switches of one bridge of the inverter;
   • or generating the test signal by connecting, in each switching state, the one phase terminal to which the test signal is to be applied, to an AC signal source.

6. An **apparatus** for detecting the position of a first part (11 a) of an electrical machine (1) relative to a second part (11b) by applying an electrical test signal to the electrical machine (1) and measuring a resulting electrical response of the electrical machine (1) to the applied test signal, the apparatus comprising a **measurement arrangement** (6) which in turn comprises an injection source (61) and a differential measurement unit (62),

   • the **injection source** (61) being arranged to apply the test signal to one phase terminal (2") of the electrical machine (1), with respect to a star point (2''') of the machine, or with respect to at least two other phase terminals (2, 2') of the electrical machine (1);
   • the **differential measurement unit** (62) being arranged to perform a differential measurement of a response to the test signal on at least two phase terminals (2, 2') of the electrical machine (1), wherein these two phase terminals are different from the phase terminal (2") to which the test signal is applied;
   • the apparatus further comprising a **position**

estimating unit (10) arranged to determine, from a result of the differential measurement, an estimate of the relative position of the second and the first part (11a, 11b).

7. The apparatus of claim 6, comprising at least one **further measurement arrangement** (6a) which in turn comprises a further injection source (61 a) and a further differential measurement unit (62a), the further measurement arrangement (6a) being arranged to inject a further test signal and to measure a response to the further test signal, but injecting and measuring at different terminals than the measurement arrangement (6).

8. The apparatus of claim 6, comprising a **measurement switching circuit** (7) arranged to connect a signal injection terminal (611) of the injection source (61) and input terminals (621, 622) of the differential measurement circuit (62) to the phase terminals (2, 2', 2") of the electrical machine (1) in different permutations.

9. The apparatus of one of claims 6 to 8, wherein the measurement arrangement (6) and a drive circuit (4), arranged to provide the power that drives the electrical machine (1), are connected in **parallel** to the phase terminals (2, 2', 2") of the electrical machine (1).

10. The apparatus of one of claims 6 to 8, wherein the measurement arrangement (6) is arranged in a **series** connection between the phase terminals (2, 2', 2") of the electrical machine (1) and a drive circuit (4), arranged to provide the power that drives the electrical machine (1).

11. The apparatus of one of claims 6 to 10, wherein the differential measurement is a **differential voltage** measurement, in particular being configured to determine a difference between two voltages by means of analog circuit elements and to perform an analog to digital conversion of this difference.

12. The apparatus of one of claims 6 to 10, wherein the differential measurement is a **differential current** measurement in particular being configured to determine a difference between two currents by means of analog circuit elements and to perform an analog to digital conversion of this difference.

13. The apparatus of one of claims 6 or 9 or 12, comprising a signal injection inverter (70) comprising, for each of the phase terminals (2, 2', 2"), an upper bridge branch connecting the phase terminal to an upper potential via an upper switch, and a lower bridge branch connecting the phase terminal to a lower potential via an lower switch, the upper or the lower bridge branches passing through a differential measurement unit which is arranged to perform differential **current** measurements between pairs of the respective bridge branches.

**14.** The apparatus of one of claims 6 or 9 or 11, comprising a signal injection circuit (73, 73', 73") comprising, for each of the phase terminals (2, 2', 2"), at least an upper bridge branch connecting the phase terminal to an upper potential via an upper switch, and a differential measurement unit which is arranged to perform differential **voltage** measurements between pairs of the phase terminals (2, 2', 2").

**15.** The apparatus of one of claims 6 to 14, comprising a common mode choke (76) effecting a coupling between a current created by the test signal flowing into the phase terminals (2, 2', 2") and a current created by the test signal flowing out of a star point (2''') of the electrical machine (1).

**Fig. 1**

**Fig. 2**

**Fig. 3**

Fig. 4

Fig. 5

Fig. 6

Fig. 7

Fig. 8

Fig. 9

Fig. 10

Fig. 11

Fig. 12

Fig. 13

Fig. 14

**Fig. 15**

**Fig. 16**

**Fig. 17**

**Fig. 18**

Fig. 19

Fig. 20

**Fig. 21**

**Fig. 22**

**Fig. 23**

**Fig. 24**

**Fig. 25**

Europäisches
Patentamt

European
Patent Office

Office européen
des brevets

# EUROPEAN SEARCH REPORT

Application Number

EP 12 40 5097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO WANG ET AL: "A Position Detection Strategy for Sensorless Surface Mounted Permanent Magnet Motors at Low Speed Using Transient Finite-Element Analysis", IEEE TRANSACTIONS ON MAGNETICS, IEEE SERVICE CENTER, NEW YORK, NY, US, vol. 48, no. 2, 1 February 2012 (2012-02-01), pages 1003-1006, XP011398374, ISSN: 0018-9464, DOI: 10.1109/TMAG.2011.2173914 * page 1003 - page 1006; figures 2-8 * | 1-3, 6-12,15 | INV. H02P6/18 |
| A | US 2007/164698 A1 (BIELER THIERRY [CH] ET AL) 19 July 2007 (2007-07-19) * paragraphs [0022] - [0023]; figure 2 * | 1-15 | |
| A,D | LEIDHOLD R ET AL: "Injection of a carrier with higher than the PWM frequency for sensorless position detection in PM synchronous motors", POWER ELECTRONICS AND MOTION CONTROL CONFERENCE, 2008. EPE-PEMC 2008. 13TH, IEEE, PISCATAWAY, NJ, USA, 1 September 2008 (2008-09-01), pages 1353-1358, XP031343763, ISBN: 978-1-4244-1741-4 * page 1355; figure 4 * | 1-15 | |
| A | US 2006/006748 A1 (NILSON THORD A G [SE] NILSON THORD AGNE GUSTAF [SE]) 12 January 2006 (2006-01-12) * paragraphs [0041] - [0069]; figures 4--8,10 * | 1-15 | TECHNICAL FIELDS SEARCHED (IPC) H02P |

-/--

The present search report has been drawn up for all claims

| Place of search | Date of completion of the search | Examiner |
|---|---|---|
| The Hague | 25 January 2013 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

Application Number

EP 12 40 5097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STIEBLER M ET AL: "DETECTION OF THE ROTOR POSITION OF A PERMANENT-MAGNET SYNCHRONOUS MOTOR AT STANDSTILL", EUROPEAN TRANSACTIONS ON ELECTRICAL POWER ENGINEERING, VDE VERLAG, DE, vol. 9, no. 1, 1 January 1999 (1999-01-01) , pages 43-47, XP000956214, ISSN: 0939-3072 * page 43 - page 45; figure 1 * ----- | 1,6 | |

TECHNICAL FIELDS
SEARCHED      (IPC)

The present search report has been drawn up for all claims

| Place of search | Date of completion of the search | Examiner |
|---|---|---|
| The Hague | 25 January 2013 | Gusia, Sorin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
....................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 12 40 5097

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2013

| Patent document cited in search report | Publication date | Patent family member(s) | | Publication date |
|---|---|---|---|---|
| US 2007164698 A1 | 19-07-2007 | AT | 434862 T | 15-07-2009 |
| | | EP | 1711997 A1 | 18-10-2006 |
| | | US | 2007164698 A1 | 19-07-2007 |
| | | WO | 2005076458 A1 | 18-08-2005 |
| US 2006006748 A1 | 12-01-2006 | EP | 1615318 A2 | 11-01-2006 |
| | | SE | 527648 C2 | 02-05-2006 |
| | | SE | 0401838 A | 10-01-2006 |
| | | US | 2006006748 A1 | 12-01-2006 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011026988 A2
- EP 0967716 A1
- US 6337554 B1
- US 6734666 B2
- CH 701063 B1
- US 6555977 B1

**Non-patent literature cited in the description**

- **LEIDHOLD, R. ; MUTSCHLER, P.** Injection of a carrier with higher than the PWM frequency for sensorless position detection in PM synchronous motors. *Power Electronics and Motion Control Conference,* September 2008, 1353-1358
- **J. R. R MAYER.** High resolution of rotary encoder analog quadrature signals. *IEEE Trans. Instrum. Meas.,* June 1994, vol. 43, 494-498
- **TAN, K.K. ; ZHOU, H.X. ; TONG HENG LEE.** New interpolation method for quadrature encoder signals,'' Instrumentation and Measurement. *IEEE Transactions,* October 2002, vol. 51 (5), 1073-1079